# Europäisches Patentamt
# European Patent Office
# Office européen des brevets

(19)

(11) Veröffentlichungsnummer: **0 122 323**
**B1**

(12) **EUROPÄISCHE PATENTSCHRIFT**

(45) Veröffentlichungstag der Patentschrift:
14.01.87

(51) Int. Cl.⁴: **F 16 K 25/02**

(21) Anmeldenummer: **83110510.1**

(22) Anmeldetag: **21.10.83**

(54) **Doppelsitzventil mit zwei Ventiltellern.**

(30) Priorität: **20.11.82 DE 3242947**

(43) Veröffentlichungstag der Anmeldung:
**24.10.84 Patentblatt 84/43**

(45) Bekanntmachung des Hinweises auf die Patenterteilung:
**14.01.87 Patentblatt 87/3**

(84) Benannte Vertragsstaaten:
**CH DE FR GB IT LI NL SE**

(56) Entgegenhaltungen:
**EP-A-0 044 517**
**EP-A-0 090 090**
**DE-A-2 248 986**
**DE-A-3 017 084**

(73) Patentinhaber: **Holstein & Kappert GmbH,
Juchostrasse 20, D-4600 Dortmund 1 (DE)**

(72) Erfinder: **Bräkelmann, Wolfgang, Ing. (grad),
Twiete 7, D-4750 Unna- Uelzen (DE)**

## Beschreibung

Die Erfindung bezieht sich auf ein Doppelsitzventil mit zwei Ventiltellern, die unabhängig voneinander und/oder gemeinsam in eine Öffnungs- und Schließstellung verbringbar sind, wobei zwischen beiden Ventiltellern ein Leckagehohlraum angeordnet ist, von dem eine Leckflüssigkeitsleitung ins Freie führt und zwischen den eigentlichen Ventilsitzen eine vorzugsweise zylindrische Ringkammer als Leckagehohlraum angeordnet ist.

Eine zwischen Doppelsitzventiltellern angeordnete Leckflüssigkeitskammer mit einer nach außen geführten Leckflüssigkeitsleitung dient insbesondere dazu, bei Beschädigungen des Ventils bzw. eines Ventilsitzes die dadurch austretende Flüssigkeit nach außen ins Freie zu leiten, wodurch einerseits eine optische Anzeige des Ventilzustandes gegeben ist und andererseits ein Druckaufbau zwischen beiden Ventiltellern, der zum Abheben eines korrespondierenden Ventiltellers führen kann, vermieden wird. Ein solcher zwischen beiden Ventiltellern befindlicher Leckagehohlraum hat allerdings den Nachteil, daß während des Durchschaltens eines Ventilkörpers solange Produkt nach außen austreten kann, bis der erste Ventilteller an dem korrespondierenden zweiten Ventilteller zur Anlage gelangt. Insbesondere dann, wenn häufige Schaltwechsel erforderlich sind, können auf diese Weise erhebliche Produktverluste auftreten, die insbesondere bei hochwertigen Flüssigkeiten, beispielsweise der Nahrungsmittelindustrie, beträchtliche Verluste verursachen.

Zur Vermeidung dieses Nachteils hat man gemäß der DE-A 2 248 986 unter anderem bereits vorgeschlagen, jedem Ventilkörper einen zusätzlichen Ansatz zuzuordnen, der zwischen der Flüssigkeitsaustrittsöffnung des Ventils und seiner Mantelfläche einen Ringspalt bildet, der eine Drosselwirkung ausübt. Durch diese Drosselwirkung wird ein schlagartiges Ausströmen der jeweils vor dem Sitz befindlichen Flüssigkeit vermieden und der während des Durchschaltvorganges unvermeidliche Leckageverlust in gewissen Grenzen gehalten. Das völlige Ausschalten dieser nicht unbeträchtlichen Verluste ist jedoch bei einem Ventil dieser Art nicht möglich.

Aus der DE-A 3 017 084 ist ferner ein Doppelsitzventil mit zwischen den Ventiltellern angeordnetem Leckageraum bekannt geworden, bei welchem vor Abheben der beiden Ventilteller von ihren Sitzen und damit Öffnen des Ventiles zur Atmosphäre diese Öffnung durch eine Membrane bzw. einen dritten Ventilteller geschlossen wird. Eine solche Ausgestaltung erfordert bei dem ohnehin komplizierten Doppelsitzventil weitere Verstellelemente, wodurch der Aufbau eines solchen Ventils erheblich verkompliziert wird. Darüber hinaus wird durch die Eingliederung dieser weiteren Elemente die bei diesen Ventilen erforderliche automatische Reinigung aller Ventilteile und -sitze erheblich erschwert. Schließlich ist aus der nicht vorveröffentlichten EP-A- 0090090 ein artgleiches Doppelsitzventil bekanntgeworden, welches im Sinne der vorliegenden Erfindungsaufgabe weiterentwickelt bzw. verbessert werden soll.

Der Erfinder hat sich deshalb bei einem Ventil mit zwei Ventiltellern, insbesondere mit unterschiedlich dimensionierten Ventiltellern die Aufgabe gestellt, unter Verzicht auf bekannte Drosselspalte einen dichten Verschluß der Ventilräume gegenüber dem Leckageraum auch während des Durchschaltens dieser Ventilteller sicherzustellen, wobei auf die bewährte Konstruktion unterschiedlich großer Ventilteller, wobei der kleinere oben und der größere unten bzw. umgekehrt angeordnet sein kann, nicht verzichtet werden soll. Insbesondere soll eine Lösung gefunden werden, die bei solchen Ventilen den Leckageaustritt verhindert, ohne daß auf schieberartige Systeme zurückgegriffen werden muß und zusätzliche Teile, z. B. Membranen oder weitere Hilfsventile erforderlich werden.

Diese der Erfindung zugrundeliegende Aufgabe wird bei einem Doppelsitzventil der eingangs genannten Art dadurch gelöst, daß die dem ersten Ventiltellerzugeordnete, eine am Innenmantel dieser Ringkammer anliegende Dichtung gleichzeitig zur Abdichtung des Ventilsitzes dieses Ventiltellers vorgesehen ist und die Dichtung derart zwischen den Anlageflächen beider Ventilteller angeordnet ist, daß diese während eines Durchschaltvorganges des ersten Ventiltellers solange im Bereich der Ringkammer verbleibt bzw. diese durchfährt, bis zwischen dem ersten und dem zweiten Ventilteller eine den Leckagehohlraum gegenüber den Ventilräumen abdichtende Verbindung gegeben ist.

Mit der erfindungsgemäßen Ausgestaltung ist insbesondere bei Ventilen mit unterschiedlich großen Ventiltellern sichergestellt, daß keine Leckageflüssigkeit während des Durchschaltvorganges des ersten Ventils bis hin zur Anlage dieses Ventils an den zweiten Ventilteller nach außen austreten kann. Hierdurch werden Produktverluste, wie sie insbesondere bei häufig schaltenden Ventilen durch Austritt nach außen auftreten, ausgeschaltet. Ferner kann unter Beibehaltung der bewährten Konstruktion auf zusätzliche Elemente wie Membranen, Hilfsventile und dgl. verzichtet werden.

Im nachfolgenden wird die Erfindung anhand eines in der Zeichnung dargestellten Ausführungsbeispiels näher erläutert:

In der Zeichnung zeigt:

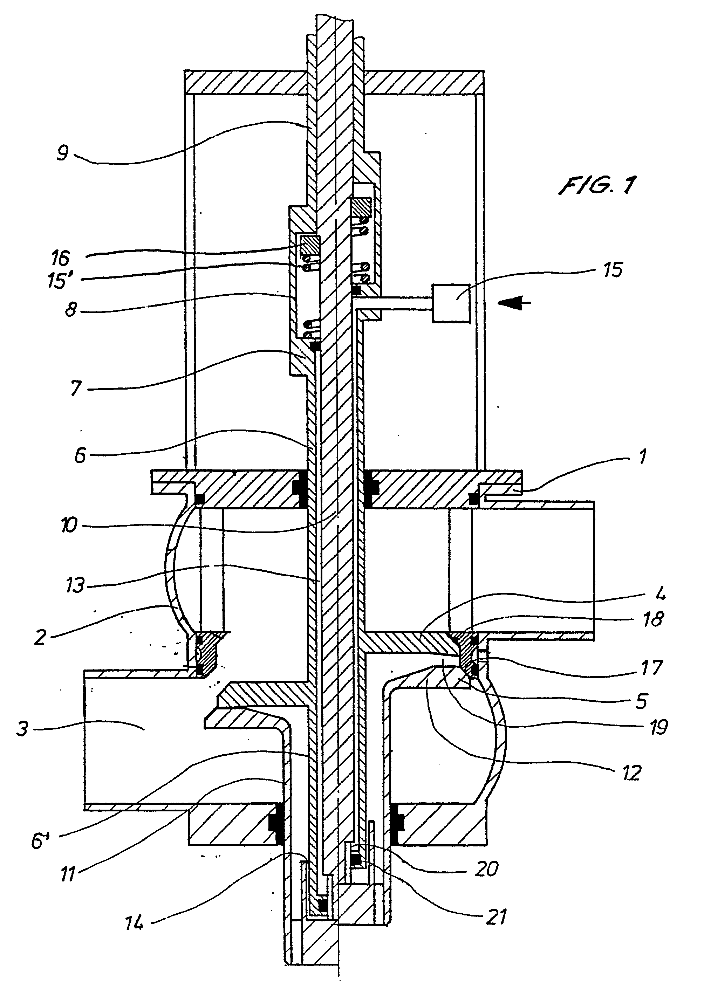

Fig. 1 einen Querschnitt durch ein Doppelsitzventil und

Fig. 2 die erfindungsgemäße Ausgestaltung des zwischen beiden Ventiltellern befindlichen Leckagehohlraumes mit einer an dessen Innenwandung anliegenden Dichtung.

Gemäß dem in der Zeichnung dargestellten Ausführungsbeispiel besteht das Doppelsitzventil aus einem Doppelgehäuse 1 mit ballig ausgebildeten Gehäusekammern 2, 3. Das Gehäuse ist als Mehrwegeverteiler ausgebildet und weist verschiedene Anschlüsse für ein Leitungssystem auf. Innerhalb des Doppelgehäuses 1 sind zwei voneinander unabhängig bewegbare Ventilkörper 4, 5 geführt. Der in Zeichnungsebene bzw. Einbaulage obere Ventilkörper 4 ist mit einer Hohlverstellstange 6 verbunden, die nach oben aus dem Doppelgehäuse 1 herausgeführt ist und eine Verdickung 7 aufweist. Mit dieser Verdickung 7 ist ein Rohr 8 verbunden, welches am oberen Ende bis zur eigentlichen Kolbenstange 9 einer nicht weiter dargestellten Verstelleinrichtung verbunden ist. Innerhalb der Hohlverstellstange 6 ist eine Verstellstange 10 gelagert, die ihrerseits aus dem Gehäuse 1 herausgeführt ist und den unteren Bereich mit dem Leckageablaufrohr bzw. der Leckflüssigkeitsleitung 11 verbindet. Die Leckflüssigkeitsleitung 11 wiederum ist Bestandteil des in Zeichnungsebene unteren Ventiltellers 12, welcher größer als der obere Ventilteller des Ventilkörpers 4 ausgelegt ist.

Die Hohlverstellstange 6 und die Verstellstange 10 bilden einen Ringspalt 13, der von der Verdickung 7 bis zum unteren Bereich der Verstellstange 10 verläuft. Diesem Ringspalt 13 schließt sich ein die Reinigungsflüssigkeit nach oben umlenkender Austrittskanal 14 an. Am oberen Ende des Ringspaltes 13 in Höhe der Verdickung befindet sich der entsprechende Anschluß 15 für die Reinigungsflüssigkeit. Innerhalb des sich daran anschließenden Rohres 8 befindet sich eine Druckfeder 15', die sich einerseits an der Verdickung 7 und andererseits auf einem Steg 16 der inneren Verstellstange 10 anlegt. Aufgabe der Druckfeder 15' ist es, den unteren größeren Ventilteller 12 gegen den zugeordneten Ventilsitz 17 bzw. bei Abheben des oberen Ventilkörpers 4 von seinem Sitz 18 gegen diesen anzupressen.

Sobald die Kolbenstange 9 durch Beaufschlagung des zugeordneten Verstellkolbens nach oben bewegt wird, hebt sich der Ventilkörper 4 von seinem Sitz ab und legt sich gegen den unter Federspannung stehenden unteren Ventilkörper 5, wodurch ein Hohlraum 19 zwischen beiden Ventiltellern geschaffen wird. Dieser Hohlraum ist mit der nach unten aus dem Ventilgehäuse herausgeführten Leckflüssigkeitsleitung 11 verbunden. Zur Reinigung dieses Bereiches wird die Reinigungsflüssigkeit durch den Ringspalt 13 und den zugeordneten Austrittskanal 14 entlang der Wandung 6' der verlängerten Hohlverstellstange geführt und erreicht den Hohlraum 19, aus dem sie entlang der gegenüberliegenden Wandung der Leckflüssigkeitsleitung 11 abfließt. Bei geschlossenem Ventil bzw. bei Anlage der Ventilkörper 4, 5 an ihren Sitzen ist der dann gebildete Hohlraum ebenfalls mit Reinigungsflüssigkeit beaufschlagbar.

Im Bereich des Austrittskanals 14 befindet sich ein Absatz 20 auf der Verstellstange 10, mit dem ein Innenring 21 der Hohlverstellstange 6' korrespondiert. Aufgabe dieser Ausbildung ist es, ein Hängenbleiben des Ventilkörpers 5 in der Öffnungsstellung zu verhindern. Sobald beide Ventilkörper 4, 5 aus der Öffnungsstellung in die Schließstellung bewegt werden, wird der untere Ventilkörper 5 durch die Einflußnahme der Druckfeder 15 mitbewegt. Sollte jedoch aus irgendwelchen Gründen ein Verklemmen des Ventilkörpers 5 vorliegen, so legt sich der Innenring 21 gegen den Absatz 20 und löst damit den Ventilkörper 5 aus seiner Verklemmung, so daß dieser wieder unter Einwirkung der Druckfeder 15 in seine ursprüngliche Position bewegt wird.

Durch die Verlagerung des größeren Ventiltellers 5 unterhalb des kleineren Ventiltellers 4 können Druckstöße innerhalb des Leitungssystems, die sich bis zum Gehäuse 3 fortpflanzen, ohne Schaden abgefangen werden, d. h., ein Öffnen des Ventils und ein dadurch gegebenes Vermischen der gegebenenfalls unterschiedlichen Flüssigkeiten in den beiden Gehäusehälften 2, 3 ist ausgeschlossen.

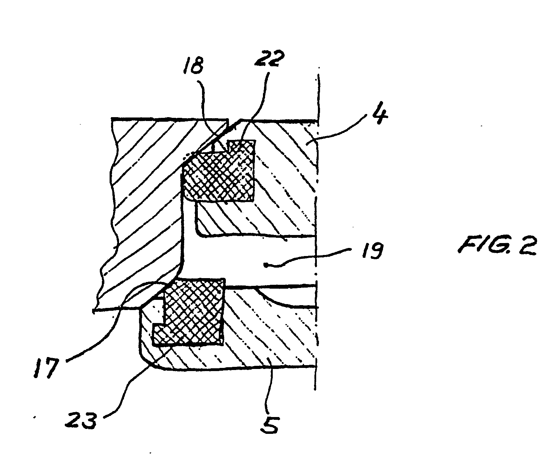

Gemäß dem in Fig. 2 dargestellten Ausführungsbeispiel ist der zwischen den Ventilsitzen 17 und 18 befindliche Hohlraum vorzugsweise zylindrisch ausgebildet, wobei dem oberen Ventilteller 4 an seinem Außenmantel eine Dichtung 22 zugeordnet ist, die einerseits eine Abdichtung des Sitzes 18 gegenüber dem Ventilteller 4 und andererseits auch eine Abdichtung gegenüber dem Leckagehohlraum 19 sicherstellt, die mindestens solange aufrechterhalten wird, bis der obere Ventilteller 4 mit seiner unteren Stirnfläche des zugeordneten zweiten unteren Ventiltellers 5 gelangt.

Vorzugsweise weist der untere Ventilteller ebenfalls eine Dichtung 23 auf, die sich geringfügig über das Niveau der oberen Stirnseite des Ventiltellers 5 abhebt und auf diese Weise eine hervorragende Abdichtung nach Auflage des oberen Ventiltellers 4 garantiert. Erst nach Anlage beider Ventilteller hebt der obere Ventilteller 4 den unteren Ventilteller 5 von seinem eigentlichen Sitz 17 ab. Unmittelbar darauf verläßt auch die Dichtung 22 den Wandungsbereich des Hohlraumes 19, so daß die Flüssigkeit aus der Leitung 3 in die obere Gehäusehälfte bzw. umgekehrt fließen kann. Durch die Anlage des Dichtungsmantels 22 an dem Innenmantel des Hohlraumes 19 ist auf diese Weise garantiert, daß während des Durchschaltvorganges kein Produkt in den Hohlraum 19 und damit ins Freie gelangen und verloren gehen kann.

## Patentansprüche

1. Doppelsitzventil mit zwei Ventiltellern (4, 5) die unabhängig voneinander und/oder gmeinsam in eine Öffnungs- und Schließstellung verbringbar sind, wobei zwischen beiden Ventiltellern eine zylindrische Ringkammer (19) als Leckagehohlraum angeordnet ist, von dem eine Leckflüssigkeitsleitung (11) ins Freie führt, und wobei dem ersten Ventilteller (4) eine am Innenmantel dieser Ringkammer (19) anliegende Dichtung (22) zugeordnet ist, dadurch gekennzeichnet, daß die Dichtung (22) gleichzeitig zur Abdichtung des Ventilsitzes (18) dieses Ventiltellers (4) vorgesehen ist und die Dichtung (22) derart zwischen den Anlageflächen beider Ventilteller angeordnet ist, daß diese während eines Durchschaltvorganges des ersten Ventiltellers (4) solange im Bereich der Ringkammer (19) verbleibt, bzw. diese abdichtend durchfährt, bis zwischen dem ersten und dem zweiten Ventilteller (4, 5) eine den Leckagehohlraum (19) gegenüber den Ventilräumen abdichtende Verbindung gegeben ist.

## Claim

1. Double seat valve with two valve heads (4, 5) which are independent of one another and/or can be brought jointly into an open position and a closed position, a cylindrical annular chamber (19) being disposed between the two valve heads as a seepage cavity, from which a seepage line (11) extends to the atmosphere, and the first valve head (4) having associated therewith a seal (22) which abuts against the inner surface of this annular chamber (19), characterised in that the seal (22) is also provided to seal the valve seat (18) of this valve head (4), and the seal (22) is disposed between the abutment faces of the two valve heads in such a manner that said seal remains in the region of the annular chamber (19) during a switch-through operation of the first valve head (4), or respectively traverses said annular chamber in a sealing manner, until a connection is formed between the first and second valve heads (4, 5), said connection sealing the seepage cavity (19) from the valve chambers.

## Revendication

Soupape à siège double, avec deux têtes de soupape (4, 5) qui peuvent être amenées indépendamment l'une de l'autre et/ou conjointement à une position d'ouverture et à une position de fermeture, une chambre annulaire cylindrique (19) étant disposée entre les deux têtes de soupape comme cavité pour fuites de liquide d'où part un conduit pour fuites de liquide (11) menant vers l'extérieur, et un joint d'étanchéité (22) s'appuyant contre la face intérieure de cette chambre annulaire (19) étant associé à la première tête de soupape (4), caractérisée en ce que le joint d'étanchéité (22) est simultanément prévu pour l'étanchéification du siège de soupape (18) de cette tête de soupape (4), et en ce que le joint d'étanchéité (22) est disposé entre les faces d'appui des deux têtes de soupape de telle sorte qu'au cours d'un processus de commutation de la première tête de soupape (4), ledit joint reste dans la zone de la chambre annulaire (19), ou la traverse de manière étanche, jusqu'à ce que soit assurée entre la première et la deuxième tête de soupape (4, 5) une liaison assurant l'étanchéification de la cavité pour fuites de liquide (19) par rapport aux chambres de soupapes.

FIG. 1

FIG. 2